# EUROPÄISCHE PATENTSCHRIFT

(11) **EP 2 853 913 B1**
(45) Veröffentlichungstag und Bekanntmachung des Hinweises auf die Patenterteilung: **08.11.2017**
(21) Anmeldenummer: 14003108.9
(22) Anmeldetag: 09.09.2014
(51) Int. Cl.: G01S 1/70, G01S 1/02, G06K 19/07, G01S 1/68, G01S 13/74, G01S 13/87

(54) **Verfahren und Vorrichtung zur Lokalisierung von Objekten**
Method and device for locating objects
Procédé et dispositif destinés à la localisation d'objets

(30) Priorität: 13.09.2013 DE 102013015222
(43) Veröffentlichungstag der Anmeldung: 01.04.2015
(73) Patentinhaber: SmartLiberty SA, 2525 Le Landeron (CH)
(72) Erfinder: Britz, Tobias, 2525 Le Landeron (CH); Rusca, Eric, 2525 Le Landeron (CH); Decrauzat, Vincent, 2013 Colombier (CH); Marietta, Neil, 2000 Neuchâtel (CH); Meyrat, Loïc, 2525 Le Landeron (CH); Gantner, Michael, 6780 Schruns (AT); Beiser, Florian, 6781 Bartholomäberg (AT); Bargehr, Markus, 6780 Silbertal (AT)
(74) Vertreter: Riebling, Peter

(56) Entgegenhaltungen:
- EP-A1- 1 657 562
- WO-A1-01/33748
- WO-A1-2004/104619
- WO-A1-2011/062659
- WO-A2-2005/041142
- US-A- 5 917 425
- US-A1- 2008 061 962
- US-A1- 2008 061 967
- US-A1- 2008 218 351
- MARTIN B W ED - SANSON L D: "WatchIt. A fully supervised identification, location and tracking system", SECURITY TECHNOLOGY, 1995. PROCEEDINGS. INSTITUTE OF ELECTRICAL AND EL ECTRONICS ENGINEERS 29TH ANNUAL 1995 INTERNATIONAL CARNAHAN CONFERENCE ON SANDERSTEAD, UK 18-20 OCT. 1995, NEW YORK, NY, USA,IEEE, US, 18. Oktober 1995 (1995-10-18), Seiten 306-310, XP010196430, DOI: 10.1109/CCST.1995.524928 ISBN: 978-0-7803-2627-9

## Beschreibung

Die Erfindung betrifft ein Verfahren und eine Vorrichtung zur Lokalisierung von Objekten oder Personen innerhalb von Gebäuden.

Aus dem Stand der Technik sind Real-Time-Location-Systeme (RTLS) mit unterschiedlichen Techniken bekannt, welche Objekte oder Personen per Funk lokalisieren. So kommen beispielsweise zellenbasierte Lokalisierungen zum Einsatz, bei denen eine Antenne eine Zone im Raum definiert. Die Antenne ist mit einem Computersystem verbunden, welches die empfangenen Daten verarbeitet und weiterleitet.

Ebenso sind Positionsmarker bekannt, die durch Übermittlung ihrer Identifikationsnummer an einen mobilen Datenträger eine Zone bzw. einen Bereich mitteilen. Bei allen Techniken werden Positionsmarker eingesetzt, die mit einer Funktechnologie entweder den mobilen Datenträger oder direkt dem Computersystem, die Lokalisierung des Datenträgers übermitteln.

Derzeit werden beispielsweise Technologien eingesetzt, welche zur Lokalisierung bzw. Identifikation entweder Niederfrequenzfunk (125 kHz), Hochfrequenzfunk (433 MHz, 868 MHz, 2.4 GHz), Infrarot oder Ultraschall verwenden.

Mit der Druckschrift US 5,661,471 wird ein System zum Lokalisieren von Personen offenbart. Hierbei gibt der Datenträger erst beim Aktivieren eines Knopfes seine Informationen preis, wobei anschließend von einem Reader die Information aufgenommen und an den jeweiligen Server weitergegeben wird. Die Übermittlung des Signals bzw. der Information erfolgt über ein IR-Signal oder Ultraschall. Nachteil bei dieser Ausführungsform ist, dass z.B. im Bereich von Altenheimen, die Person, die den Sender trägt, immer aktiv handeln muss, um die jeweilige Position an den Reader zu übermitteln. Selbstverständlich wäre eine automatische Taktung des Tags möglich, dies würde jedoch eine hohe Batterieleistung erfordern.

Die DE 10 2008 031 923 A1 beschreibt ein Verfahren zur Überwachung eines Raumes, wobei eine Triangulation der Signalstärke durchgeführt wird. Anhand der Signalstärken lässt sich somit die jeweilige Position des Datenträgers im Raum feststellen.

Mit der DE 60 2005 001 007 T2 wird ein System zur Überwachung eines Raumes offenbart. In einem ersten Anwendungsbeispiel kommt ein Bewegungsmelder in Form eines PIR-Sensors (passive infrared) zum Einsatz, welcher eine Bewegung im Raum feststellt. Mit der Druckschrift findet jedoch keine Lokalisierung bzw. keine Identifikation eines Datenträgers innerhalb eines Raumes statt.

Mit der US 5,917,425 wird ein System mit IR-/ RF-Modulen offenbart. Zwar kann bei diesem System eine Person innerhalb eines Raumes lokalisiert werden bzw. festgestellt werden, jedoch findet keine genaue Identifizierung statt. Ein Nachteil besteht darin, dass die Datenträger-Information lediglich durch ein IR-Signal übermittelt wird und anschließend von einem RF-Sender an den RF-Reader weitergegeben wird. Hierbei muss jedoch eine sichtbare Verbindung für eine wirkungsvolle Infrarot-Signalübertragung ausgehend von dem Tag gegeben sein.

Die bisher bekannten Systeme aus dem Stand der Technik weisen den Nachteil auf, dass entweder eine Funktechnologie oder eine Infrarottechnologie eingesetzt wird, was den alltäglichen Gebrauch limitiert. Zum Beispiel funktioniert ein Infrarotmarker nicht mit Datenträgern die abgedeckt sind. Niederfrequenzmarker funken durch Wände und können somit nicht Raumgenau lokalisieren. Des Weiteren werden die aktuellen Marker über ein Kabel mit Strom versorgt, was sehr aufwendig und teuer ist. Darüber hinaus funken die Marker permanent und belasten somit das Übertragungsmedium. Dies geht soweit, dass einige Länder gemäß dem Versorgungsprinzip nicht permanent in der Nähe von Lebewesen eingesetzt werden dürfen.

WO 2005/041142 A2 beschreibt den nächstliegenden Stand der Technik und offenbart ein Verfahren zur Lokalisierung eines Objektes, wobei ein Datenträger des Objekts (Objekt Tag) ein Radiosignal gefolgt von einem Infrarotsignal sendet. Das Infrarotsignal ist sehr kurz wodurch Energie gespart wird.

WO 2011/062659 A1 offenbart eine Vorrichtung zur Lokalisierung eines Objektes, wobei der Datenträger am Objekt zum Senden von Infrarot- und Radiowellen ausgebildet ist, während im Raum Infrarot-Empfänger und Radiowellen-Empfänger vorhanden sind. Es ist beschrieben, dass die Funktion der Sender des Datenträgers und der Empfänger im Raum auch vertauscht werden kann.

WO 01/33748 A1 offenbart beschreibt einen Objekt-Tag mit Infrarot Sender/Empfänger und Radiowellen-Sender. Zur Einsparung von Energie benutzt das Objekt-Tag einen Power-down-mode. Ein Aufwecken erfolgt periodisch und über Infrarotsignal, d.h. der Infrarot-Empfanger des Tags ist ständig aktiv.

Die US 2008/061967 A1 beschreibt das Aufwecken des Objekt-Tags mittels Infrarot.

Die US 2008/218351 A1 beschreibt ein Objekt-Tag mit InfrarotSender/Empfänger und Radiowellen-Sender, wobei der Objekt-Tag periodisch aufgeweckt wird, um zu testen ob ein Infrarot-Triggersignal empfangen werden kann.

Der Erfindung liegt die Aufgabe zugrunde, eine Vorrichtung zur Lokalisierung eines Objektes z.B. einer Person so weiterzubilden, dass das Objekt genauer und besser lokalisiert werden kann. Ferner soll ein möglichst geringer Energieverbrauch des tragbaren Datenträgers erreicht werden.

Zur Lösung der gestellten Aufgabe dient die technische Lehre der Ansprüche 1 und 6.

Wesentliches Merkmal der Erfindung ist, dass die Vorrichtung einen kombinierten Einsatz aus einem Niedrigfrequenzsignal und einem Infrarotsignal vorsieht, um ein Objekt zu Lokalisieren.

In einer ersten bevorzugten Ausführungsform ist der Marker als Multifrequenz-Lokalisierungs-Marker (MLM) ausgebildet und als fix montierter Transceiver in einem abgeschlossenen Raum innerhalb eines Gebäudes angeordnet. Der Transceiver stellt eine konstruktive Baueinheit aus einem Sender und einem Empfänger dar.

Der Marker ist bevorzugt mit einem passiven Infrarotsensor (PIR) gekoppelt, welcher unter Ausnutzung der Pyroelektrizität seiner Empfängerfläche auf eine Temperaturänderung reagiert. Betritt nun eine Person den abgeschlossenen Raum, so wird die Bewegung von dem PIR-Sensor erfasst und der Marker aktiviert. Der Marker sendet nun ein Niederfrequenz-Aufweck-Signal an einen tragbaren Datenträger.

Der tragbarere Datenträger, im Folgenden auch Tag genannt, ist entweder an einer Person angeordnet oder an einem bewegbaren Objekt, wie z.B. einem medizinischen Untersuchungsgerät oder einem Krankenbett. Trägt eine Person den Datenträger, so kann dieser beispielsweise als Armband oder als Namensschild ausgebildet sein. Die Erfindung soll hierauf jedoch nicht beschränkt sein, selbstverständlich sollen sämtliche Datenträgerausbildungen unter den Schutz dieser Anmeldung fallen.

Der Datenträger erhält nun ein Aufweck-Signal (z.B. Niederfrequenz), welches bereits eine Identifikation des Raumes (Zone) bzw. eines Teilbereiches (Subzone) enthält. Diese Identifikation kann im Marker vorkonfiguriert sein. Der Datenträger liest und speichert diese Identifikationsnummern (Zone und Subzone) und schaltet seinen Infrarotempfänger an, um zu Überprüfen, ob der Marker, welcher das Aufwecksignal mit der Identifikation gesendet hat, "Sichtbar" ist.

Innerhalb einer vordefinierten Zeit sendet der Marker ein Infrarotsignal mit einer Kennung. Diese Kennung kann ebenfalls eine Identifikation enthalten. Nachdem der Datenträger sowohl das Niederfrequenzsignal, als auch das Infrarotsignal empfangen hat, sendet er eine Bestätigung mit einer Identifikation per Hochfrequenzfunk an eine Empfangsantenne, die diese Information per LAN an ein Computersystem weiterleitet. Die ausgesendete Information kann hierbei Informationen über die neu empfangene Zone und Subzone enthalten.

Durch die Kombination aus einem Niederfrequenzsignal und einem Infrarotsignal, welche beide an den gleichen Datenträger gesendet werden, entstehen folgende Vorteile:
- Der Datenträger kann Batteriebetrieben werden, es entfallen Verkabelungskosten. Die Bauteilgröße kann stark reduziert werden.
- Die Positionsbestimmung des Datenträgers funktioniert Raumgenau und Etagengenau, da die genaue Lokalisierung erst abgeschlossen ist, wenn der Datenträger sowohl das Niederfrequenz, als auch das Infrarotsignal empfange hat.
- Eine grobe Positionsbestimmung funktioniert auch wenn der Datenträger abgedeckt ist, denn hier wurde nur das Niederfrequenzsignal von dem Datenträger empfangen und per Hochfrequenzfunk an die Empfangsantenne weitergeleitet.

Eine Lokalisierung des Datenträgers kann nun wie folgt ablaufen:

### Verfahrensschritt 1:

Der Marker sendet ein Niederfrequenzsignal mit einer Identifikation aus.

### Verfahrensschritt 2:

Das Niederfrequenzsignal wird in einem zweiten Verfahrensschritt von dem Datenträger empfangen, worauf dieser eine Infrarotschnittstelle aktiviert. Das Niederfrequenzsignal kann eine Identifikation, wie z.B. über die Zone bzw. Subzone enthalten.

### Verfahrensschritt 3:

Zeitnah sendet der Marker ein Infrarotsignal mit einer Kennung an den gleichen Datenträger aus. Unter zeitnahem Versenden versteht die Erfindung, dass das Niederfrequenzsignal entweder gleichzeitig mit dem Infrarotsignal ausgesendet wird oder eine bestimmte Zeit später.

Bei der von der Infrarotschnittstelle ausgesendeten Kennung kann es sich entweder um einfaches Signal handeln, welches der Datenträger verwendet, um den "Sichtkontakt" zu überprüfen oder die Kennung enthält mehrere Informationen, wie z.B. über die Zone bzw. Subzone.

Der Datenträger empfängt das Infrarotsignal und verknüpft die empfangenen Informationen aus dem Niederfrequenz- und Infrarotsignal mit seiner Identifikation und sendet die gewonnen Daten an einen Reader.

Der Reader leitet die gewonnen Daten an ein Computersystem weiter, welches die Lokalisierung auswertet. Solch eine Auswertung kann beispielsweise mit einer Software erfolgen. Mit Hilfe der Software lässt sich dann das jeweilige Objekt beispielsweise innerhalb eines Gebäudes lokalisieren. Ebenso kann über die Software bestimmte Rechte, wie Zugangsrechte etc. verwaltet werden.

Ein Vorteil bei der Kombination aus Niederfrequenz- und Infrarot-Technik ist, dass der Niederfrequenz-Sender den Datenträger erstmalig aufweckt und dadurch der Datenträger sehr Batterie sparend betrieben werden kann. Dies ist ein wesentlicher Vorteil, denn somit kann der Tag relativ klein ausgebildet werden und von einer Person beispielsweise am Handgelenk getragen werden.

Das Lokalisierungsverfahren ist durch die Kombination der beiden Signalübertragungstechniken genauer, da mit der Niederfrequenz-Technik zwar eine Lokalisierung der Person innerhalb eines Raumes bzw. sogar unter einer Bettdecke festgestellt werden kann, jedoch findet mit der IR-Technik eine genaue, bzw. raumgebundene Lokalisierung statt.

Durch das Aussenden des Niederfrequenz-Signals an den Tag wird dieser aufgeweckt und gibt seine Informationen preis. Somit lässt sich grob feststellen, wo die Person sich befindet. Da die Niederfrequenz-Übertragungsmethode auch durch Wände überträgt, ist eine genauere Bestimmung durch eine Infrarotübertragung notwendig. Für eine funktionierende Infrarot-Übertragung muss eine Sichtverbindung zwischen dem im Raum installierten Sender bzw. Reader und dem Datenträger zu Verfügung stehen. Dadurch lässt sich die Person innerhalb eines Raumes genauer Lokalisieren, da erst durch die Sichtverbindung des Infrarot-Signals diese Person in dem jeweiligen Raum erkannt werden kann.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der in der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einem Ausführungsweg darstellenden Zeichnungen näher erläutert. Hierbei ergehen aus den Zeichnungen und ihrer Beschreibung weitere erfindungswesentliche Merkmale und Vorteile der Erfindung hervor.
- Figur 1:: Schematische Darstellung der erfindungswesentlichen Vorrichtung zur Lokalisierung von Personen bzw. Objekten
- Figur 2:: Schematische Darstellung der Vorrichtung
- Figur 3:: Schematische Darstellung des Datenaustausches zwischen dem Marker, dem Datenträger und dem Reader
- Figur 4:: Draufsicht auf ein Gebäude, in welchem die erfindungswesentliche Vorrichtung installiert ist.
- Figur 5:: Schematische Darstellung der einzelnen Signalübertragungsmethoden zwischen dem Marker, dem Datenträger und dem Reader/ Lesegerät
- Figur 6:: Darstellung einer Person innerhalb eines Zimmers mit der erfindungswesentlichen Vorrichtung

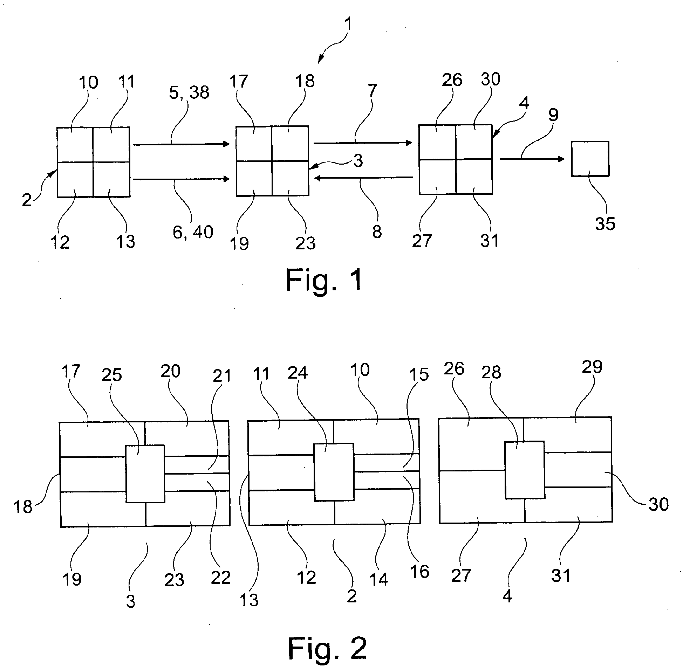

Mit der Figur 1 wird eine schematische Darstellung der erfindungswesentlichen Vorrichtung gezeigt.

Die Vorrichtung 1 besteht in einer ersten Ausführungsform im Wesentlichen aus einem Marker 2, einem Datenträger 3 und einem Reader 4.

Der Marker 2 ist hierbei so ausgebildet, dass er als Kästchen bzw. als Kasten in einem Raum unauffällig installiert werden kann, wobei eine erhöhte Position von Vorteil ist. Um eine Person bzw. ein Objekt innerhalb eines Gebäudes genau Lokalisieren zu können, ist bevorzugt in jedem Raum solch ein Marker 2 installiert.

Die Räume innerhalb des Gebäudes können als Zonen bzw. Subzonen definiert sein. Jeder Raum ist mit einer eigenen Identifikation 38 im Marker 2 hinterlegt. Bei besonderes großen Räumen können mehrere Marker 2 entfernt voneinander installiert sein, welche jeweils eine Identifikation 38 für den Raum (=Zone) und die jeweilige Position im Raum (Suzone) enthalten können.

Der Marker 2 weist einen RF-Sender/ Empfänger 11 auf, mit dem er Funksignale entweder empfangen oder aussenden kann. Des Weiteren weist der Marker 2 einen Niederfrequenzsender auf, wobei der Sendevorgang des Niederfrequenzsignals entweder permanent ein, permanent aus oder gepulst erfolgen kann.

Des Weiteren weist der Marker 2 einen Infrarotsender 13 auf, mit welchem Infrarotsignale 6 innerhalb des Raumes übertragen werden können. Für eine besonders gut Übertragung der Infrarotsignale 6 mit dem jeweiligen Objekt bzw. mit der jeweiligen Person, ist der Marker 2 bevorzugt in einer erhöhten Position innerhalb des Raumes angeordnet.

Um den Eintritt einer Person bzw. die Bewegung eines Objektes innerhalb eines abgeschlossenen Raumes festzustellen, weist der Marker 2 bevorzugt einen Bewegungssensor 10 auf, welcher beispielsweise mithilfe von Infrarotsignalen eine Bewegung der jeweiligen Person bzw. des Objektes innerhalb eines abgeschlossenen Raumes feststellen kann.

Des Weiteren weist der Marker 2 einen Taster 15 auf, mit welchem eine manuelle Aktivierung möglich ist. Die manuelle Aktivierung kann beispielweise immer dann verwendet werden, wenn sich mehrere Objekte bzw. Personen in einem Raum befinden und eine aktuelle Lokalisierung aller, relativ zeitnah stattfinden soll.

Zur Stromversorgung kann der Marker 2 bevorzugt mit dem Stromnetz des Hauses versorgt werden. Es ist jedoch ebenso ein Batteriebetrieb oder dergleichen zur Stromversorgung möglich.

Der Marker 2 sendet entweder gepulst oder in Abhängigkeit des Bewegungssensors 10 ein Niederfrequenzsignal 5 mit einem Niederfrequenzsender 12 (LF-Sender) aus, welches von einem Datenträger 3 und seinem Niederfrequenzempfänger 19 empfangen wird. Dieses Niederfrequenzsignal 5 dient als Aufwachsignal für den Datenträger 3. Der Datenträger 3 empfängt über das Niederfrequenzsignal 5 eine erste Identifikation 38, welche beispielsweise die Raumnummer, die Raumgröße, die Temperatur des Raumes, die Position des Raumes innerhalb des Gebäudes oder eine Information, wie z.B. Fenster offen enthält.

Um eine genaue Lokalisierung des Datenträgers 3 innerhalb eines Raumes zu gewährleisten, sendet mit kurzem zeitlichem Abstand der Marker 2 ein weiteres Signal in Form eines Infrarotsignal 6 mit einem Infrarotsender 13 (IR-Sender) an den Datenträger 3 aus. Besteht nun eine Sichtverbindung zwischen dem Marker 2 und dem Datenträger 3, so kann das Infrarotsignal 6 wirksam übertragen werden. Durch die wirksame Übertragung des Infrarotsignals 6 ist gewährleistet, dass sich der Datenträger in dem jeweiligen Raum befindet.

Das Infrarotsignal 6 des Markers 2 wird beim Datenträger 3 mit einem Infrarotempfänger 18 empfangen. Das Niederfrequenzsignal 5 des Markers 2 wird beim Datenträger 3 mit dem Niederfrequenzempfänger 19 empfangen.

Der Datenträger 3 weist eine Stromversorgung auf, welche bevorzugt als Batterie ausgebildet ist. Dadurch dass der Datenträger 3 im Normalfall lediglich im Standby-Modus betrieben wird und nur durch das Niederfrequenzsignal 5, welches vom Marker 2 ausgesendet wird, aufgeweckt wird, ist diese Ausführungsform sehr stromsparend ausgebildet.

Der Datenträger 3 empfängt von dem Marker über das Niederfrequenzsignal 5 eine Identifikation 38 und über das Infrarotsignal 6 eine Kennung 40. Die Identifikation 38 enthält beispielsweise die Raumidentifikation. Die Kennung 40 kann als einfaches IR-Signal ausgebildet sein, welches lediglich dazu dient, um die Sichtverbindung zwischen dem Marker 2 und dem Datenträger 3 zu überprüfen. Selbstverständlich kann die Kennung 40 auch weitere Informationen bzw. Identifikationen enthalten. Auch ist es möglich, dass die Informationen aus der Identifikation 38 und der Kennung 40 gleich sind.

Nachdem nun der Datenträger 3 die Signale 5,6 empfangen hat, verknüpft er diese mit seiner eigenen Identifikationsinformation 39 zu einem Datenpaket. Die Identifikation 39 des Datenträgers 3 kann beispielsweise Angaben über die jeweilige Person enthalten, die den Datenträger 3 trägt. Ebenso kann die Identifikation 39 eine Information über das Objekt beinhalten, an welchem der Datenträger 3 angeordnet ist.

In einer ersten Ausführungsform kann der Datenträger 3 als Armband ausgebildet sein und Identifikationsinformationen 39 wie beispielsweise den Namen, das Alter, besondere Gesundheitsmerkmale und Zugangsbeschränkungen enthalten.

In einer weiteren bevorzugten Ausführungsform ist der Datenträger 3 an einem Objekt angebracht, wobei der Datenträger Identifikationsinformationen 39 über das Objekt gespeichert hat, wie z.B. das Objekt ist ein EKG-Gerät oder das Objekt ist ein Krankenbett mit der Nummer XYZ.

Ebenso ist mit dem erfindungswesentlichen Datenträger eine Temperatur-Aufzeichnung und Lokalisierung von Essenswagen innerhalb eines Gebäudes wie z.B. im Krankenhaus möglich.

In einer weiteren Ausführungsform kann beispielsweise der Datenträger 3 an einer Akte in einer Anwaltskanzlei angeordnet sein und Identifikationsinformationen 39 über den Akteninhalt enthalten. Die zu suchende Akte kann dann leicht im Gebäude lokalisiert werden.

Selbstverständlich lassen sich jegliche Identifikationsinformationen 39 auf dem Datenträger 3 speichern, sodass dieser universell eingesetzt werden kann.

In einer weiteren Ausführungsform kann beispielsweise der Datenträger 3 bei einer Archiv-Überwachung eingesetzt werden, wobei festgestellt werden kann, ob eine autorisierte Person sich im Archiv bzw. Lager befindet und bewegt.

Ebenso kann eine Überwachung eines einzelnen Arbeitsplatzes durchgeführt werden. Die jeweilige Person trägt den Datenträger 3 und kann somit leicht innerhalb eines Raumes bzw. Gebäudes geortet werden. Auch wäre eine Totman-Überwachung der Person denkbar.

Ein weiteres Anwendungsbeispiel wäre der Einsatz des Datenträgers 3 für ein Zutritts- und Ticketing-System in Museen. Durch die exakte Lokalisierung des Datenträgers kann beispielsweise eine interaktive Show in einem bestimmten Bereich innerhalb eines Gebäudes gestartet werden.

Der Datenträger 3 weist des Weiteren einen Radiofrequenz-Sender bzw. RF-Empfänger 11 auf, womit er Funksignale 7, 8 senden und empfangen kann. Unter einem RF-Sender/ Empfänger 17 versteht die vorliegende Erfindung eine Funkschnittstelle, mit welcher Funksignale empfangen bzw. gesendet werden kann. Der Funksignalaustausch erfolgt mit einem entfernten Reader 4.

Bei dem aussendenden RF-Signal 7 handelt es sich bevorzugt um Informationen, welche der Datenträger 3 vorher von dem Marker 2 bekommen hat und mit seiner eigenen Information verknüpft hat. Diese kombinierte Information, welche bevorzugt aus einer Rauminformation und einer Personen- bzw. Objekt-ID besteht, wird dann über ein RF-Signal 7 an einen Reader 4 weitergeleitet.

Der Reader 4 hat ebenfall einen RF-Sender/ -Empfänger 26, womit er Funksignale 7 und 8 des Datenträgers 3 empfangen und aussenden kann. Ferner weist der Reader 4 ein kabelgebundenes Datennetz auf, welches z.B. eine Internet- bzw. Ethernetverbindung 27 ist und womit er die gewonnenen Daten des Datenträgers 3 durch ein Signal, wie z.B. einem Ethernetsignal 9 an ein Computersystem 35 weiterleiten kann. Der Reader 4 dient somit als Schnittstelle zwischen dem Datenträger 3 und dem Computersystem 35.

Sowohl der Datenträger 3, als auch der Reader 4 weisen eine Stromversorgung 23 bzw. 31 auf, welche bevorzugt als Batterie ausgebildet ist. Es ist jedoch auch eine andere Stromversorgung, wie z. B. eine Netzstromversorgung oder dergleichen möglich. Der Reader 4 kann ferner mit einer LED-Anzeige 30 ausgestattet sein, welche graphisch den Betriebszustand des Readers 4 darstellt.

Mit der Figur 2 wird eine genauere, schematische Darstellung der erfindungswesentlichen Lokalisierungsvorrichtung dargestellt.

Ausgehend von dem Sender 2 weist dieser eine CPU 24 auf, welche sowohl den NF-Sender 12 (Niederfrequenzsender), als auch den Infrarotsender 13 und den Funksender 11 bzw. Empfänger steuert. Des Weiteren weist der Sender 2 einen Infrarotbewegungssensor 10 auf. Zur manuellen Aktivierung kann der Sender 2 noch einen Taster 15 aufweisen und eine optische Signalleuchte in Form einer LED-Anzeige 16. Die Stromversorgung des Markers 2 erfolgt über Batterie 24 Volt, 230 Volt oder eine Power-Over-Ethernet (POE) -Verbindung.

Der Marker 2 sendet mit einem Niederfrequenzsender 12 ein Niederfrequenzsignal 5 an einen Datenträger 3, welcher das Niederfrequenzsignal 5 mit dem Niederfrequenz-Empfänger 19 empfängt. Zeitgleich bzw. zeitlich versetzt wird ein Infrarotsignal 6, ausgehend von dem Marker 2 bzw. dem dort angeordneten Infrarotsender 13, an den Datenträger 3 und dessen Infrarotempfänger 18 ausgesendet. Bei der Übertragung des Niederfrequenzsignals 5 bzw. des Infrarotsignals 6 sendet der Marker 2 eine Identifikation 38 und eine Kennung 40 an den Datenträger 3, welcher diese mit einer CPU 25 auswertet und anschließend mit Hilfe eines RF-Sender/ Empfängers 17 und einem RF-Signal 7 an einen Reader 4 weiterleitet.

Der Reader 4 weist für den Empfang bzw. für das Aussenden der RF-Signale 7, 8 hierfür einen RF-Sender/ Empfänger 26 auf. Um den Reader 4 manuell zu aktivieren weist dieser bevorzugt eine Taste 29 auf. Für die Betriebszustandsanzeige ist der Reader 4 mit LED-Anzeige 30 ausgestattet.

Die Stromversorgung 31 des Readers 4 erfolgt bevorzugt über einen Batteriebetrieb. Es ist jedoch auch eine Stromversorgung mit 24 Volt, 230 Volt oder eine Power-Over-Ethernet (POE) möglich. Der Reader 4 verarbeitet die empfangenen Signale 7 mit seiner CPU 28 und leitet diese mit einem Ethernetsignal 9 über ein Ethernetmodul 27 an ein Computersystem 35 weiter.

Das Computersystem 35 weist eine Verwaltungssoftware bzw. Benutzeroberfläche auf, mit welcher sich die einzelnen Informationen der jeweiligen Marker 2 bzw. Datenträger 3 verwalten lassen.

So kann beispielsweise überwacht werden, ob sich der jeweilige Datenträger 3 noch in dem bestimmten Raum mit dem Marker 2 aufhält. Dies kann beispielsweise ein Patient oder ein Arzt in einem Krankenhaus sein.

Ebenso kann eine Überwachung der Ein- und Ausgänge eines Gebäudes erfolgen. Dies ist besonders wichtig, wenn sichergestellt sein muss, dass bestimmte Personen nicht das Gebäude verlassen sollten.

Des Weiteren können bestimmte Objekte, wie z.B. eine besondere medizinische Apparatur leicht anhand des der angeordneten Datenträgers 3 lokalisiert werden.

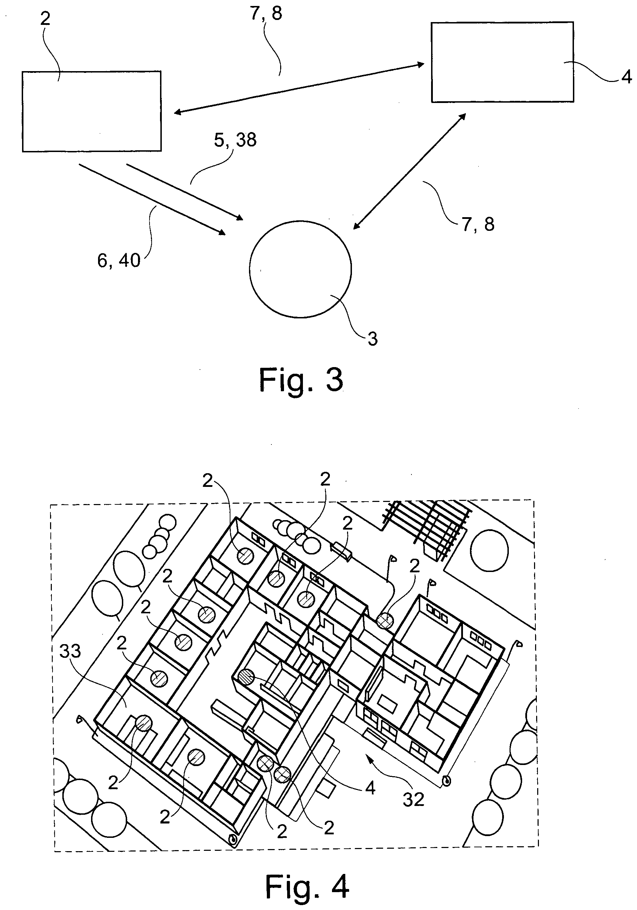

Mit der Figur 3 wird der Datenaustausch zwischen dem Marker 2, dem Datenträger 3 und dem Reader 4 dargestellt. Ausgehend von dem Marker 2, welcher bevorzugt mit einem Bewegungssensor 10, einem Niederfrequenzsender 12 und einem Infrarotsender 13 ausgestattet ist, wird ein gepulstes bzw. getaktetes Niederfrequenzsignal 5 an einen Datenträger 3 gesendet.

Gleichzeitig bzw. zeitlich versetzt wird ein Infrarotsignal 6 mit einer Kennung 40 an den Datenträger 3 gesendet.

Der Datenträger 3 empfängt die Identifikation 38 und die Kennung 40 und gibt die Daten zusammen mit seiner eignen Identifikation 39 mit einem Funksignal (RF-Signal) 7, 8 an einen Reader 4 weiter. Der Reader 4 kann ebenso über ein RF-Signal 7, 8 mit dem Marker 2 kommunizieren.

Mit der Figur 4 wird eine Draufsicht eines Gebäudes 32 gezeigt, wobei innerhalb des Gebäudes 32 zahlreiche Zimmer 33 angeordnet sind.

Bei einer bevorzugten Ausführungsform weist jedes Zimmer 33 einen Marker 2 auf. Betritt nun eine Person zusammen mit dem Datenträger 3 ein bestimmtes Zimmer 33, so registriert der Marker 2 den Eintritt bzw. die Bewegung mit seinem Bewegungssensor 10 und sendet ein Niederfrequenzsignal 5 mit seinem Niederfrequenzsender 12 an den Datenträger 3.

Der Datenträger 3 weist einen Niederfrequenzempfänger 19 auf, welcher bevorzugt gepulst arbeitet bzw. auch permanent betrieben werden kann. Empfängt nun der Datenträger 3 das Niederfrequenzsignal 5 von dem Marker 2, so schaltet dieser seine Infrarotschnittstelle 18 (IR-Empfänger) ein und wartet auf ein Infrarotsignal 6. Zeitlich versetzt bzw. gleichzeitig sendet der Marker 2 mit seiner Infrarotschnittstelle 13 ein Infrarotsignal 6 an den Infrarotempfänger 18 des Datenträgers 3.

Durch die Sichtverbindung zwischen dem Marker 2 und dem Datenträger 3 ist nun gewährleistet, dass sich der Datenträger 3 bzw. die tragende Person bzw. das Objekt innerhalb eines bestimmten Zimmers 33 befindet.

Damit wird der Nachteil nach dem Stand der Technik behoben, da die Niederfrequenzsignale auch durch Raumwände strahlen können und nur durch eine Infrarotverbindung gewährleistet ist, dass sich der jeweilige Datenträger 3 auch in dem dazugehörigen Raum befindet, in welchem der Marker 2 angeordnet ist.

Die Erfindung ist jedoch nicht auf eine Anwendung eines Markers in einem bestimmten Raum beschränkt. Solch ein Marker 2 kann ebenso auch über Eingängen in einem Gebäude 32 angeordnet sein. Durch die Anordnung eines Markers 2 vor einem Gebäudeeingang bzw. Ausgang lässt sich leicht ein Zugang bzw. Austritt eines Datenträgers 3 bzw. die dazugehörige Person erkennen.

Die CPU 25 des Datenträgers 3 verarbeitet die gewonnenen Informationen des Markers 2 zusammen mit ihrer eigenen Information und sendet diese über ein RF-Signal 7 an einen Reader 4, welcher bevorzugt zentral in einem Gebäude angeordnet ist. Dieser Reader 4 empfängt das Signal 7 über einen RF-Sender/ Empfänger 26 und verarbeitet dieses Signal über eine CPU 28 und gibt die daraus gewonnenen Daten über eine Ethernet-Schnittstelle 27 an ein Computersystem 35 weiter.

Durch das Computersystem kann leicht festgestellt werden, dass sich eine Person unerlaubt aus dem Gebäude entfernen will, welch hierfür nicht befugt ist. Durch das übergeordnete Computersystem 35 können somit Zugriffsrechte bzw. Einschränkungen eingerichtet werden, sodass bestimmt werden kann, dass die Person X1 nur in bestimmte Räume gehen kann bzw. ein Alarmsignal ausgelöst wird, wenn diese Person X1 unerlaubt in andere Räume eintritt bzw. austritt.

Um die Ein- und Ausgänge besser überwachen zu können, sind dort bevorzugt Marker 2 mit einer schnellen Pulsung des Niederfrequenzsignals 5 angeordnet. Bei den jeweiligen Zimmer-Markern 2 kann, neben dem Infrarotbewegungssensor 10, auch beispielsweise eine 5 minütige Pulsung eines Niederfrequenzsignals 5 erfolgen.

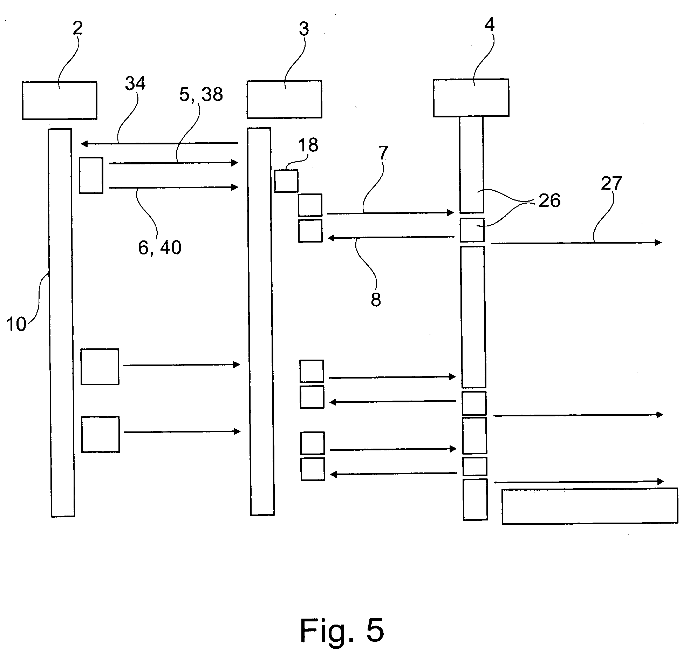

Mit der Figur 5 sind schematisch noch einmal die Signalströme zwischen dem Marker 2 und dem Datenträger 3 und dem Reader 4 dargestellt.

Ausgehend von dem Marker 2, welcher bevorzugt eine Infrarotschnittstelle 13 aufweist, wird eine Bewegung 34 mit einem Bewegungssensor 10 erkannt. Daraufhin sendet der Marker 2 ein Niederfrequenzsignal 5, welches auch als Aufwachsignal ausgebildet ist, an einen Datenträger 3, der einen Niederfrequenzempfänger 19 aufweist und somit das Niederfrequenzsignal 5 empfängt.

Mit zeitlichem Abstand bzw. gleichzeitig wird, ausgehend von dem Marker 2, ein Infrarotsignal 6 an den gleichen Datenträger 3 gesendet, wodurch gewährleistet ist, dass bei korrektem Empfang der Datenträger 3 sich in "Sichtweite" zu dem jeweiligen Marker 2 befindet.

Die beiden übermittelten Signale 5,6 werden im Datenträger 3 mit der CPU 25 verarbeitet und als RF-Signal 7 an einen Reader 4 weitergegeben. Dieser Reader 4 verfügt über ein RF-Sender/ Empfänger 26 und gibt ein Antwortsignal in Form eines RF-Signals 8 an den jeweiligen Datenträger 3 zurück. Die gewonnenen Daten werden im Reader 4 verarbeitet und über ein EthernetSignal 27 an eine Computerschnittstelle 35 weitergegeben.

Figur 5 zeigt eine weitere bevorzugte Ausführungsform, bei der beispielsweise ein Niederfrequenzsignal 5 getaktet im Abstand von 30 Sekunden in das jeweilige Zimmer 33 gesendet wird.

Ebenso ist es möglich, dass das Niederfrequenzsignal 5 manuell über einen Taster 15 an den jeweiligen Datenträger 3 ausgesendet wird. Hierbei kann die ausgesendete Information die Tastennummer beinhalten und kann als Alarm interpretiert werden.

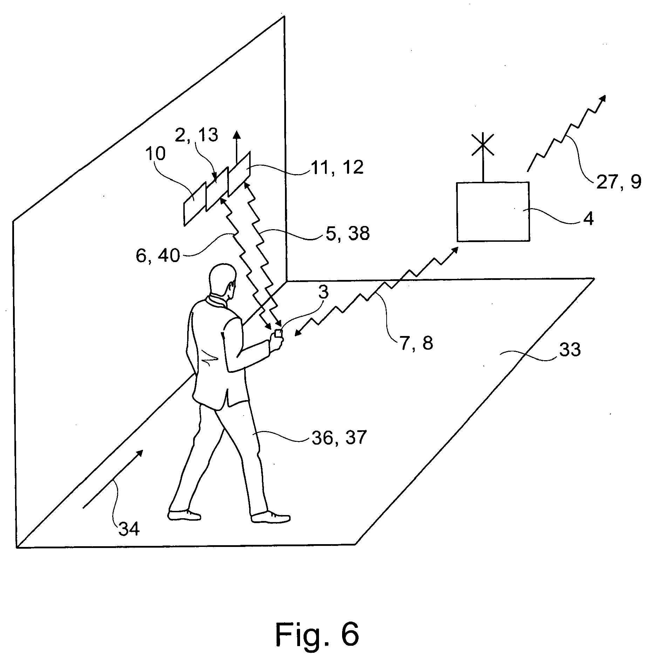

Die Figur 6 zeigt eine Person 36, welche einen Datenträger 3 am Handgelenk trägt. Die Person 36 bewegt sich in Bewegungsrichtung 34 innerhalb eines Zimmers 33, wobei die Bewegungen durch einen Bewegungssensor 10 festgestellt werden.

Der Marker 2 sendet, entweder gleichzeitig oder zeitlich versetzt, jeweils ein Niederfrequenzsignal 5 und ein Infrarotsignal 6 an den Datenträger 3 der Person 36.

Der Datenträger 3 verknüpft die empfangene Identifikation 38, 40 mit seiner eignen Identifikation 39 und sendet diese Daten über eine Funkverbindung 7,8 an einen Reader 4.

In einer weiteren Vorteilhaftenausführungsform weist der Datenträger 3 ein Gyroskop 20 auf. Mithilfe des Gyroskops 20 lassen sich Lagen- bzw. Richtungsänderungen feststellen.

Ist beispielsweise der Datenträger 3 als Armband ausgebildet, so kann durch das Gyroskop eine Bewegung der jeweiligen Person festgestellt werden. Ebenso kann eine Totmann-Feststellung getroffen werden. Die gewonnen Daten werden dann an den Reader 4 übertragen.

Der Reader 4 verarbeitet die Daten und sendet diese über eine Ethernetverbindung 27 an ein Computersystem 35. Das Computersystem 35 kann dann über eine Software den Ist-Zustand mit dem Soll-Zustand abgleichen. Somit kann beispielsweise festgestellt werden, ob eine Person schläft oder ob Sie sich bewegt.

Entscheidend bei der vorliegenden Erfindung ist, dass erst durch die Kombination aus einem Niederfrequenzsignal 5 und einem Infrarotsignal 6 ein Datenträger 3 genau lokalisiert werden kann.

### Zeichnungslegende

- 1: Vorrichtung
- 2: Marker
- 3: Datenträger (Tag)
- 4: Reader/ Lesegerät
- 5: Niederfrequenzsignal
- 6: Infrarotsignal
- 7: RF-Signal
- 8: RF-Signal (Antwort)
- 9: Ethernetsignal
- 10: Bewegungssensor
- 11: RF-Sender/ Empfänger von 2
- 12: LF-Sender
- 13: IR-Sender
- 14: Stromversorgung von 2
- 15: Taster
- 16: Licht (LED)
- 17: RF-Sender/ Empfänger von 3
- 18: IR-Empfänger
- 19: LF-Empfänger
- 20: Gyroskop
- 21: Taster
- 22: LED
- 23: Stromversorgung von 3
- 24: CPU von 2
- 25: CPU von 3
- 26: RF-Sender/ Empfänger von 4
- 27: Ethernet
- 28: CPU
- 29: Taster
- 30: LED
- 31: Stromversorgung von 4
- 32: Gebäude
- 33: Zimmer
- 34: Bewegung
- 35: Computersystem
- 36: Person
- 37: Objekt
- 38: Identifikation von 2
- 39: Identifikation von 3
- 40: Kennung

## Patentansprüche

1. Verfahren zur Lokalisierung eines Objektes z.B. einer Person (36) in einer Ort- oder Gebäudeumgebung und Darstellung des Aufenthaltsortes dieses Objektes auf einem Computersystem (35), wobei das Objekt einen Datenträger (3) aufweist und an ortfesten Referenzpunkten jeweils mindestens ein Marker (2) angeordnet ist, **dadurch gekennzeichnet, dass**
a) in einem ersten Verfahrensschritt der Marker (2) ein Niederfrequenzsignal (5) mit einer Identifikation (38) aussendet,
b) das Niederfrequenzsignal (5) in einem zweiten Verfahrensschritt von dem Datenträger (3) empfangen wird, worauf dieser eine Infrarotschnittstelle (18) aktiviert,
c) zeitnah sendet der Marker (2) ein Infrarotsignal (6) mit einer Kennung (40) an den gleichen Datenträger (3) aus,
d) der Datenträger (3) empfängt das Infrarotsignal (6) und verknüpft die empfangene Identifikation (38) und die Kennung (40) mit seiner Identifikation (39) und sendet die gewonnen Daten (38, 39, 40) an einen Reader (4),
e) wobei der Reader (4) die Daten (38, 39, 40) an ein Computersystem (35) weiterleitet, welches die Lokalisierung auswertet.

2. Verfahren nach Anspruch 1, **dadurch gekennzeichnet, dass** ein Bewegungssensor (10) eine Bewegung (34) des Objektes erfasst und anschließend den Marker (2) aktiviert.

3. Verfahren nach einem der Ansprüche 1 oder 2, **dadurch gekennzeichnet, dass** der Marker (2) gepulst das Niederfrequenzsignal (5) aussendet.

4. Verfahren nach einem der Ansprüche 1 bis 3, **dadurch gekennzeichnet, dass** der Datenträger (3) die Daten (38, 39, 40) mit einem Funksignal (7) über eine RF-Sender / Empfänger (17) an den Reader (4) sendet.

5. Verfahren nach einem der Ansprüche 1 bis 4, **dadurch gekennzeichnet, dass** der Reader (4) die empfangenen Daten (38, 39, 40) aus dem Funksignal (7) verarbeitet und über ein kabelgebundene Datennetz an das Computersystem (35) weiterleitet.

6. Vorrichtung zur Durchführung des Verfahrens nach Anspruch 1 zur Lokalisierung eines Objektes z.B. einer Person (36) in einer Ort- oder Gebäudeumgebung und Darstellung des Aufenthaltsortes dieses Objektes auf einem Computersystem (35), **gekennzeichnet durch**
mindestens einen Marker (2) zur Aussendung eines Niederfrequenzsignals (5) mit einer Identifikation (38) an einen Datenträger (3) und zum zeitnahen Senden eines Infrarotsignals (6) mit einer Kennung (40) an den gleichen Datenträger (3), wobei der Marker (2) an einem ortsfesten Referenzpunkt angeordnet ist,
den an dem Objekt angeordneten Datenträger (3) zum Empfang des Niederfrequenzsignals (5) und zur Aktivierung einer Infrarotschnittstelle (18) und Empfangen des Infrarotsignals (6) und Verknüpfen der empfangenen Identifikation (38) und der Kennung (40) mit seiner Identifikation (39) und Senden der gewonnen Daten (38, 39, 40) an einen Reader (4), und
den Reader (4) zum Weiterleiten der Daten (38, 39, 40) an das Computersystem (35), welches die Lokalisierung auswertet.

7. Vorrichtung nach Anspruch 6, **dadurch gekennzeichnet, dass** der Marker (2) einen Bewegungssensor (10) aufweist.

8. Vorrichtung nach Anspruch 6 oder 7, **dadurch gekennzeichnet, dass** der Marker (2) und der Datenträger (3) einen Funksender und Funkempfänger (17) aufweist.

9. Vorrichtung nach einem der Ansprüche 6 bis 8, **dadurch gekennzeichnet, dass** der Datenträger (3) über eine Batterie mit Strom versorgt wird.

10. Vorrichtung nach einem der Ansprüche 6 bis 9, **dadurch gekennzeichnet, dass** der Marker (2) einen Taster (21) aufweist, welcher den Lokalisierungsvorgang des Datenträgers (2) manuell auslöst und eine zusätzlich Information überträgt.

## Claims

1. Method for locating an object e.g. a person (36) in a locality or building environment and displaying the whereabouts of this object on a computer system (35), wherein the object has a data carrier (3) and at fixed reference points is arranged in each case at least one marker (2), **characterised in that**
a) in a first step the marker (2) emits a low-frequency signal (5) with an identification (38),
b) in a second step the low-frequency signal (5) is received by the data carrier (3), whereupon the latter activates an infrared interface (18),
c) promptly the marker (2) emits an infrared signal (6) having a code (40) to the same data carrier (3),
d) the data carrier (3) receives the infrared signal (6) and links the received identification (38) and the code (40) with its identification (39) and sends the data obtained (38, 39, 40) to a reader (4),
e) wherein the reader (4) forwards the data (38, 39, 40) to a computer system (35) which evaluates the location.

2. Method according to claim 1, **characterised in that** a movement sensor (10) detects a movement (34) of the object and then activates the marker (2).

3. Method according to one of claims 1 or 2, **characterised in that** the marker (2) emits the low-frequency signal (5) in pulses.

4. Method according to one of claims 1 to 3, **characterised in that** the data carrier (3) sends the data (38, 39, 40) with a radio signal (7) via a RF transmitter / receiver (17) to the reader (4).

5. Method according to one of claims 1 to 4, **characterised in that** the reader (4) processes the received data (38, 39, 40) from the radio signal (7) and forwards them via a wired data network to the computer system (35).

6. Apparatus for carrying out the method according to claim 1 for locating an object e.g. a person (36) in a locality or building environment and displaying the whereabouts of this object on a computer system (35), **characterised by**
at least one marker (2) for emitting a low-frequency signal (5) having an identification (38) to a data carrier (3) and for promptly sending an infrared signal (6) having a code (40) to the same data carrier (3), wherein the marker (2) is arranged at a fixed reference point,
the data carrier (3) arranged on the object for receiving the low-frequency signal (5) and for activating an infrared interface (18) and receiving the infrared signal (6) and linking the received identification (38) and the code (40) with its identification (39) and sending the data obtained (38, 39, 40) to a reader (4), and
the reader (4) for forwarding the data (38, 39, 40) to the computer system (35) which evaluates the location.

7. Apparatus according to claim 6, **characterised in that** the marker (2) has a movement sensor (10).

8. Apparatus according to claim 6 or 7, **characterised in that** the marker (2) and the data carrier (3) has a radio transmitter and radio receiver (17).

9. Apparatus according to one of claims 6 to 8, **characterised in that** the data carrier (3) is supplied with current via a battery.

10. Apparatus according to one of claims 6 to 9, **characterised in that** the marker (2) has a sensor (21) which manually triggers the locating operation of the data carrier (2) and transmits additional information.

## Revendications

1. Procédé pour localiser un objet, par exemple une personne (36), dans un environnement de lieu ou de bâtiment, et pour représenter l'emplacement de cet objet sur un système informatique (35), l'objet présentant un support de données (3), et au moins un marqueur (2) étant disposé à chaque point de référence fixe, **caractérisé en ce que**
a) lors d'une première étape de procédé, le marqueur (2) émet un signal basse fréquence (5) avec une identification (38),
b) le signal basse fréquence (5) est reçu lors d'une deuxième étape de procédé par le support de données (3), après quoi celui-ci active une interface à infrarouge (18),
c) rapidement, le marqueur (2) envoie un signal infrarouge (6) avec une caractérisation (40) au même support de données (3),
d) le support de données (3) reçoit le signal infrarouge (6) et combine l'identification (38) reçue et la caractérisation (40) avec son identification (39), et envoie les données (38, 39, 40) à un lecteur (4),
e) le lecteur (4) transmettant les données (38, 39, 40) à un système informatique (35) qui analyse la localisation.

2. Procédé selon la revendication 1, **caractérisé en ce qu'**un capteur de mouvement (10) détecte un mouvement (34) de l'objet et active ensuite le marqueur (2).

3. Procédé selon l'une des revendications 1 ou 2, **caractérisé en ce que** le marqueur (2) émet le signal basse fréquence (5) en mode pulsé.

4. Procédé selon l'une des revendications 1 à 3, **caractérisé en ce que** le support de données (3) envoie les données (38, 39, 40) au lecteur avec un signal radio (7) par l'intermédiaire d'un émetteur/récepteur RF (17).

5. Procédé selon l'une des revendications 1 à 4, **caractérisé en ce que** le lecteur (4) traite les données reçues (38, 39, 40) à partir du signal radio (7), et les transmet par l'intermédiaire d'un réseau de données à câble au système informatique (35).

6. Dispositif pour la mise en oeuvre du procédé selon la revendication 1, pour localiser un objet, par exemple une personne (36), dans un environnement de lieu ou de bâtiment, et pour représenter l'emplacement de cet objet sur un système informatique (35), **caractérisé par**
au moins un marqueur (2) pour envoyer un signal basse fréquence (5) avec une identification (38) à un support de données (3) et pour envoyer rapidement un signal infrarouge (6) avec une caractérisation (40) au même support de données (3), le marqueur (2) étant disposé au niveau d'un point de référence fixe,
le support de données (3), disposé sur l'objet, pour recevoir le signal basse fréquence (5), activer une interface infrarouge (18), recevoir le signal infrarouge (6), combiner l'identification (38) reçue et la caractérisation (40) avec son identification (39), et envoyer à un lecteur (4) les données (38, 39, 40) recueillies, et
le lecteur (4) pour transmettre les données (38, 39, 40) au système informatique (35), qui analyse la location.

7. Dispositif selon la revendication 6, **caractérisé en ce que** le marqueur (2) comporte un capteur de mouvement (10).

8. Dispositif selon la revendication 6 ou 7, **caractérisé en ce que** le marqueur (2) et le support de données (3) comportent un émetteur radio et un récepteur radio (17).

9. Dispositif selon l'une des revendications 6 à 8, **caractérisé en ce que** le support de données (3) est alimenté en courant par une batterie.

10. Dispositif selon l'une des revendications 6 à 9, **caractérisé en ce que** le marqueur (2) comporte un bouton-poussoir (21) qui déclenche manuellement l'opération de localisation du support de données (2) et transmet une information supplémentaire.
